# EUROPÄISCHE PATENTANMELDUNG

(11) **EP 0 898 022 A2**
(43) Veröffentlichungstag der Anmeldung: **24.02.1999**
(21) Anmeldenummer: 98114034.6
(22) Anmeldetag: 28.07.1998
(51) Int. Cl.: E03B 7/07

(54) **Filterarmaturen-Anordnung für Trinkwasser**

(30) Priorität: 19.08.1997 DE 19735893
(71) Anmelder: HANS SASSERATH & CO KG, D-41352 Korschenbroich (DE)
(72) Erfinder: Hecking, Willi, 41238 Mönchengladbach (DE)
(74) Vertreter: Weisse, Jürgen, Dipl.-Phys.

(57) **Zusammenfassung**

Bei einer Filterarmaturen-Anordnung für Trinkwasser mit einer einen Druckminderer (46) und ein Filter (80) enthaltenden Baugruppe (40) ist die Baugruppe (40) an einen Verteiler (54) mit mehreren Anschlüssen (118,120, 122, 124) und ein zwischen Verteiler (54) und Baugruppe (40) eingeschaltetes Umschaltventil (52) angeschlossen. Dabei sind durch das Umschaltventil (52) wahlweise Strömungswege zwischen einem Anschluß (118 oder 120) des Verteilers (54) als Einlaß nur über das Filter (80) oder über die Reihenschaltung von Filter (80) und Druckminderer (46) mit einem anderen Anschluß (122 und/oder 124) als Auslaß herstellbar.

## Beschreibung

Die Erfindung betrifft eine Filterarmaturen-Anordnung für Trinkwasser mit einer einen Druckminderer und ein Filter enthaltenden Baugruppe.

DIN 1988 sieht vor, daß am Haus-Wassereingang hinter dem Wasserzähler ein mechanisches Filter vorgesehen ist. Dieses Filter dient insbesondere dem Korrosionsschutz.

DIN 1988 sieht weiterhin den Einsatz von Druckminderem vor. Ein solcher Druckminderer hat die Aufgabe, ankommende Versorgungs-Drücke für die Trinkwasser-Installation auf ein gewünschtes Maß zu reduzieren. Im Bereich des Wohnungsbaus ist ein Druckminderer zentral für die gesamte Hauswasser-Installation vorgeschrieben, wenn der Versorgungs-Druck größer als 50 MPa ist. Aber auch bei Versorgungs-Drücken unter 50 MPa werden in einigen Fällen Druckminderer eingebaut. Diese Druckminderer werden dann üblicherweise dezentral eingebaut, beispielsweise zur Absicherung von Trinkwasser-Erwärmern oder als Füllgruppen für Heizungsanlagen.

In vielen Fällen wird auch der Druck für die Trinkwasser-Installation zentral durch einen Druckminderer reduziert, während vor dem Druckminderer eine Leitung unreduziert abgezweigt wird, beispielsweise für eine Gartenleitung. Auch das Trinkwasser in einer solchen unreduziert abgezweigten Leitung muß jedoch gefiltert werden. Die abgezweigte Leitung muß dann zwischen Filter und Druckminderer abgehen.

Es ist bekannt, Filter und Druckminderer zu einer Baugruppe zu kombinieren. Eine solche einen Druckminderer und ein Filter enthaltende Baugruppe ist beispielsweise bekannt aus der EP-B-0 176 867. Diese Druckschrift zeigt eine in eine Wasserleitung einzubauende Filterarmatur mit einem seitlichen Ansatz, der mit einem Eingang der Filterarmatur verbunden ist. An dem Ansatz sitzt eine Filtertasse. Koaxial in dem Ansatz ist an der Filterarmatur ein mit dem Ausgang der Filterarmatur verbundener Verbindungsteil vorgesehen. An diesem Verbindungsteil sitzt koaxial zu der Filtertasse eine auswechselbare Filterkerze. Koaxial innerhalb der Filterkerze sitzt ein Druckminderer, dessen Regelventil den zum Ausgang führenden Wasserweg beherrscht.

Durch die DE-A-39 18 667 ist eine rückspülbare Filterarmatur bekannt. Die Filterarmatur enthält ein Filtergehäuse, das mit einem Einlaß verbunden ist. In das Filtergehäuse ragt koaxial zu diesem ein Auslaßstutzen. Koaxial zu dem Auslaßstutzen sitzt ein Filter. Ein Druckminderer ist gleichachsig zu dem Auslaßstutzen angeordnet. Das Regelventil des Druckminderers beherrscht den Wasserdurchfluß durch den Auslaßstutzen. Zur Reinigung des Filters kann das Filter von Zeit zu Zeit axial an einer Absaugvorrichtung vorbeigeführt werden. Einlaß und Anslaß enden in einer seitlichen Anschlußfläche an dem Filtergehäuse, wobei ein zentraler Einlaßkanal von dem dazu koaxialen, ringförmigen Auslaßkanal umgeben ist. Die Anschlußfläche liegt an einer entsprechenden Anschlußfläche eines in die Rohrleitung eingebauten Anschlußstückes an.

Es ist auch bekannt, eine rückspülbare Filterarmatur nach Art der DE-A-39 18 667 an einen 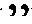 Kreuzflansch" anzuschließen, d.h. an ein Anschlußstück mit vier Anschlüssen als Einlässe und Auslässe, die kreuzförmig angeordnet sind, wobei die Achsen der Anschlüsse in einer Ebene liegen und jeweils um 90° gegeneinander winkelversetzt sind.

Unter Verwendung solcher Filterarmaturen werden 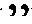 Hauswasserverteiler-Zentren" aufgebaut. Von diesen gehen die verschiedenen druckreduzierten oder nicht-reduzierten Leitungen ab. Wenn dabei kein Druckminderer für die Druckreduzierung vorgesehen werden soll, dann wird eine Filterarmatur ohne Druckminderer vorgesehen. Wenn ein Druckminderer erforderlich ist, wird eine Filterarmatur mit Druckmindere etwa nach Art der DE-A-39 18 667 verwendet. Wenn aber für die von dem Hauswasserverteiler-Zentrum teils Leitungen mit reduziertem Druck und teils Leitungen wie Gartenleitungen mit unreduziertem Druck ausgehen, dann müssen für die Filterarmatur und den Druckminderer getrennte Baugruppen vorgesehen werden. Die Installation wird unterschiedlich je nachdem, ob die Versorgungsleitung von rechts oder links, von oben oder unten ankommt. Das erfordert hohen Installations-Aufwand. Der Raumbedarf ist hoch. Es ist weiterhin nachteilig, daß für die verschiedenen Betriebsweisen von dem Installateurjeweils unterschiedliche Baugruppen auf Lager gehalten werden müssen.

Der Erfindung liegt die Aufgabe zu Grunde, eine Filterarmaturen-Anordnung für Trinkwasser der eingangs genannten Art für die verschiedenen vorstehend geschilderten Installationsweisen anwendbar zu machen und dadurch den Raumbedarf von Hauswasserverteiler-Zentren und die Lagerhaltung zu vermindern.

Erfindungsgemäß wird diese Aufgabe dadurch gelöst, daß daß die Baugruppe an einen Verteiler mit mehreren Anschlüssen und ein zwischen Verteiler und Baugruppe eingeschaltetes Umschaltventil angeschlossen ist, wobei durch das Umschaltventil wahlweise Strömungswege zwischen einem Anschluß des Verteilers als Einlaß nur über das Filter oder über die Reihenschaltung von Filter und Druckminderer mit einem anderen Anschluß als Auslaß herstellbar sind.

Nach der Erfindung wird somit eine einzige, als Baugruppe aufgebaute Kombination von Filter und Druckminderer vorgesehen. Nur eine solche Baugruppe braucht auf Lager gehalten werden. Durch Betätigung des Umschaltventils können damit die verschiedenen Betriebsweisen realisiert werden.

Ausgestaltungen der Erfindung sind Gegenstand der Unteransprüche.

Ein Ansführungsbeispiel der Erfindung ist nachstehend unter Bezugnahme auf die zugehörigen Zeichnungen näher erläutert.
- Fig.1: ist eine Vorderansicht einer Baugruppe mit einem Filter und einem Druckminderer.
- Fig.2: zeigt einen Schnitt längs der Linie II - II von Fig.1.
- Fig.3: zeigt eine Ansicht des Verteilers und Drehschieber-Ventils von rechts in Fig.2 gesehen.
- Fig.4: zeigt einen Schnitt längs der Linie IV - IV von Fig.3.
- Fig.5: zeigt eine Seitenansicht des Verteilers und des Drehschieber-Ventils von Fig.3 bis 4.
- Fig.6: zeigt eine Ansicht des Verteilers von links in Fig.2 gesehen.
- Fig.7: zeigt in vergrößertem Maßstab eine Einzelheit 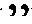 W" von Fig.4
- Fig.8: ist eine abgebrochene Darstellung der Baugruppe mit Filter und Druckminderer, und zwar im wesentlichen die Anschlußfläche zu dem Drehschieber-Ventil, in Richtung des Pfeiles 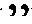 Z" von Fig.2 gesehen.

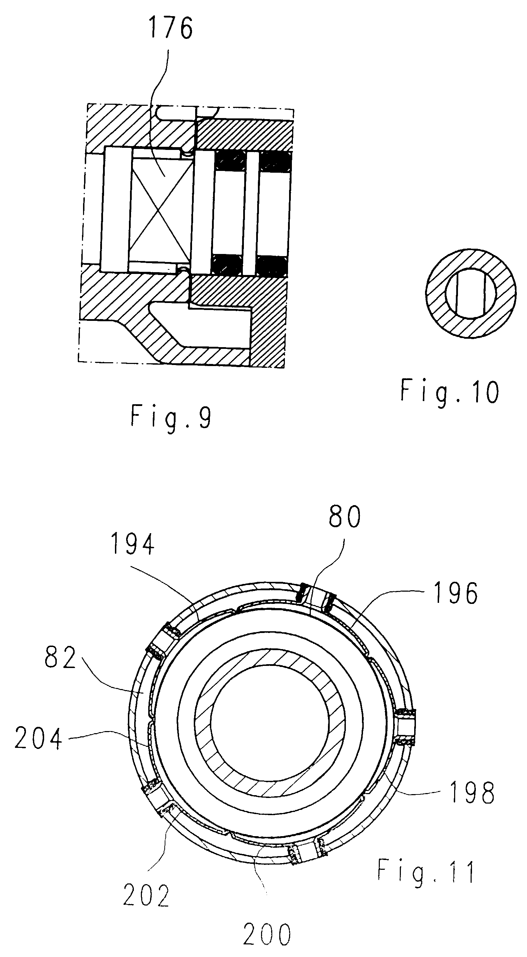

- Fig.9: zeigt in vergrößertem Maßstab eine Einzelheit 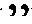 Y" von Fig.2.
- Fig.10: zeigt einen Schnitt längs der Linie X - X von Fig.2.
- Fig.11: zeigt eine Ansicht, teilweise im Schnitt, in Richtung des Pfeiles XI von Fig.2 gesehen.
- Fig.12 bis 19: zeigen verschiedene Stellungen des Drehschieber-Ventils, wobei die zugehörigen Tabellen angeben, ob der Druck an dem jeweiligen Ausgang durch den Druckminderer reduziert ( 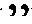 RED") oder nicht-reduziert ( 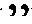 NRED") ist.
- Fig.20 bis 31: zeigen verschiedene Installations-Arten, die mit einer Filterarmaturen-Anordnung der hier beschriebenen Art vorgenommen werden kann.

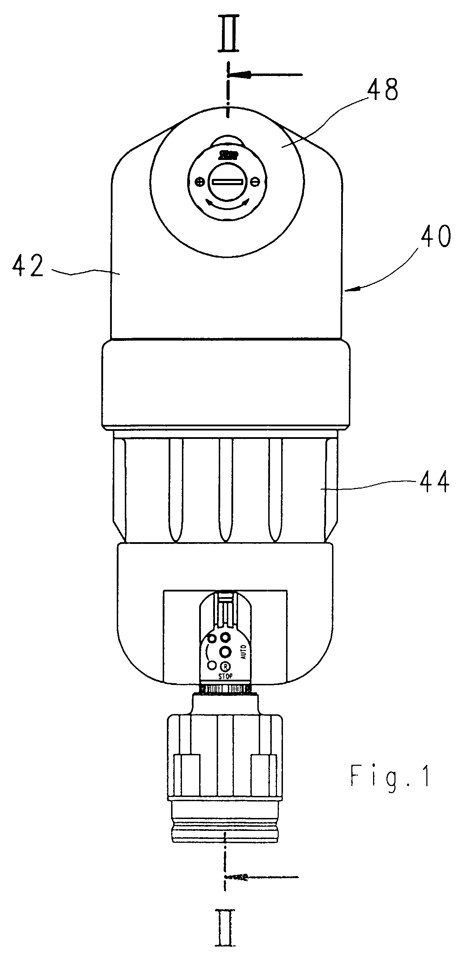

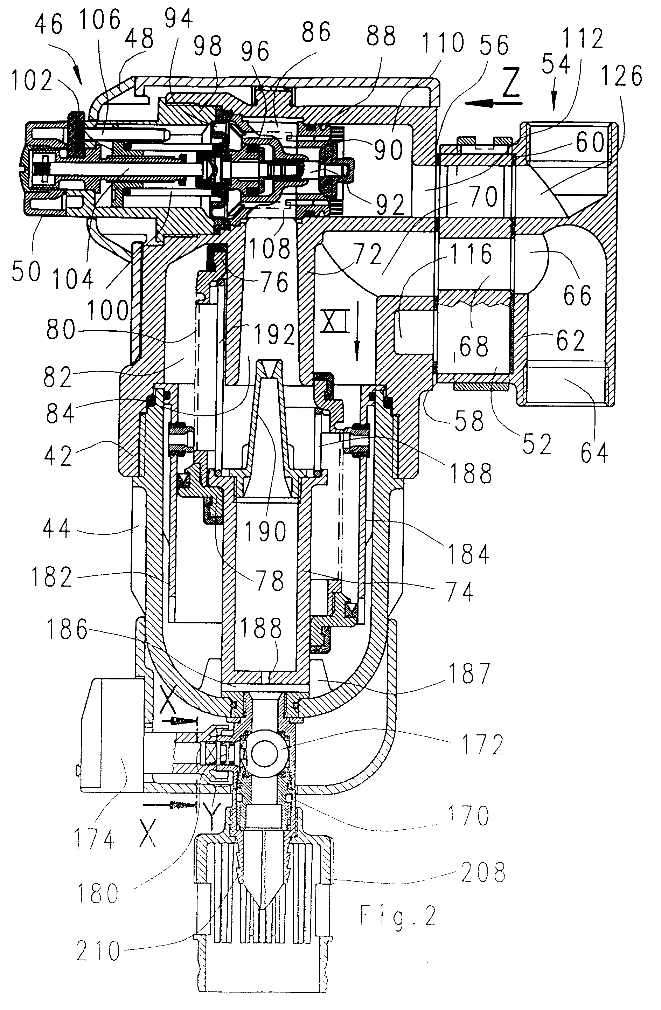

In Fig.1 ist eine Filterarmatur 40 von links in Fig.2 gesehen dargestellt. Die Filterarmatur 40 enthält einen Gehäuse-Oberteil 42 und einen Gehäuse-Unterteil 44. In dem Gehäuse-Oberteil 44 sitzt ein Druckminderer 46 mit einem Gehäuse 48 und einem Stellknopf 50. Der Druckminderer 46 sitzt bei der Filterarmatur 40 nicht wie bei den oben erwähnten bekannten Filterarmaturen koaxial in dem Gehäuse sondern quer zur Achse des Gehäuses im oberen Teil des Gehäuse-Oberteils 42. Die Filterarmatur 40 ist über ein Drehschieber-Ventil 52 (Fig.2) mit einem Verteiler 54 (Fig.2) verbunden.

Das Gehäuse-Oberteil 42 weist auf der in Fig.2 rechten Seite eine Anschlußfläche 56 auf, an welcher eine bauteilseitige Ventilfläche 58 des Drehschieber-Ventils 52 anliegt. Eine der Filterarmatur 40 abgewandte Ventilfläche 60 des Drehschieber-Ventils 52 liegt an einer Anschlußfläche 62 des Verteilers 54 an. Der Verteiler 54 weist einen Einlaß-Anschluß 64 auf, der mit der (nicht dargestellten) Versorgungsleitung verbunden ist. Der Einlaß-Anschluß 64 ist mit einem zur Drehachse des Drehschieber-Ventils 52 gleichachsigen Einlaßöffnung 66 des Verteilers 54 in Verbindung. Über die Einlaßöffnung 66 stömt das Wasser aus der Versorgungsleitung der Filterarmatur 40 zu. Die Einlaßöffnung 66 steht mit einem ebenfalls zur Drehachse des Drehschieber-Ventils 52 koaxialen zentralen Durchgang 68 des Drehschieber-Ventils 52 in Verbindung. Dieser zentrale Durchgang 68 ist wieder ständig mit einem Einlaß 70 in der Anschlußfläche 56 der Baugruppe oder Filterarmatur 40 verbunden. Über diesen Einlaß 70 tritt das Wasser stets in die Baugruppe 40 ein, unabhängig von der Stellung des Drehschieber-Ventils 52.

In den Gehäuse-Oberteil 42 ragt koaxial ein Auslaßrohr 72. In dem Gehäuse-Unterteil 44 ist gleichachsig zu dem Auslaßrohr 72 ein Führungsrohr 74 gehalten. Die Betriebsstellung der Baugruppe ist in der linken Seite von Fig.2 dargestellt. Auf dem Auslaßrohr 72 ist ein erster Filterhalter 76 geführt. Auf dem Führungsrohr 74 ist ein zweiter Filterhalter 78 geführt. Zwischen den Filterhaltern 76 und 78 ist ein Filter 80 gehalten. Das über den Einlaß 70 zufließende Wasser tritt in den Ringraum 82 zwischen dem Gehäuse-Oberteil 42 und dem Filter 80. Das Wasser strömt dann radial einwärts durch das Filter 80 hindurch zu dem in dem Auslaßrohr 72 gebildeten Auslaßkanal 84.

Der Auslaßkanal 84 mündet in eine Querbohrung 86 in dem Gehäuse-Oberteil 42. In der Querbohrung 86 sitzt der Druckminderer 46.

Der Druckminderer 46 ist von bekannter Bauart. Der Druckminderer weist ein Regelventil mit einem in der Querbohrung 86 sitzenden Ventilsitz 88 und einem stromab von dem Ventilsitz 88 angeordneten Ventilteller 90. Der Ventilteller 90 ist über einen Stößel 92 mit einer Membran 94 verbunden. Die Membran ist in einem Gehäuse zwischen zwei Gehäuseteilen 96 und 98 gehaltert. Auf der in Fig.2 rechten Seite in dem Gehäuseteil 96 ist die Membran 94 von dem Ausgangsdruck stromab von dem Ventilteller 90 beaufschlagt. Von links her wirkt auf die Membran 94 eine vorgespannte Schraubenfeder 100. Die Schraubenfeder 100 stützt sich an einem Federwiderlager 102 ab. Das Federwiderlager 102 ist auf einer Gewindespindel 104 geführt. Außerdem ist das Federwiderlager 102 durch einen sich parallel zu der Gewindespindel erstreckenden Führungsstab 106 geradgeführt. Bei Verdrehen der Gewindespindel 104 mittels des Stellknopfes 50 wird das Federwiderlager 102 axial verstellt. Dadurch ändert sich die Vorspannung der Schraubenfeder 100 und damit der Ausgangsdruck des Druckminderers.

Der Ventilsitz 88 unterteilt die Querbohrring 86 in zwei Kammern 108 und 110. Die Kammer 108 liegt stromauf von dem Regelventil. In dieser Kammer 108 herrscht praktisch der unreduzierte Druck aus der Versorgungsleitung. Die Kammer 110 liegt stromab von dem Regelventil. In dieser Kammer 110 herrscht der durch den Druckminderer 46 reduzierte Druck.

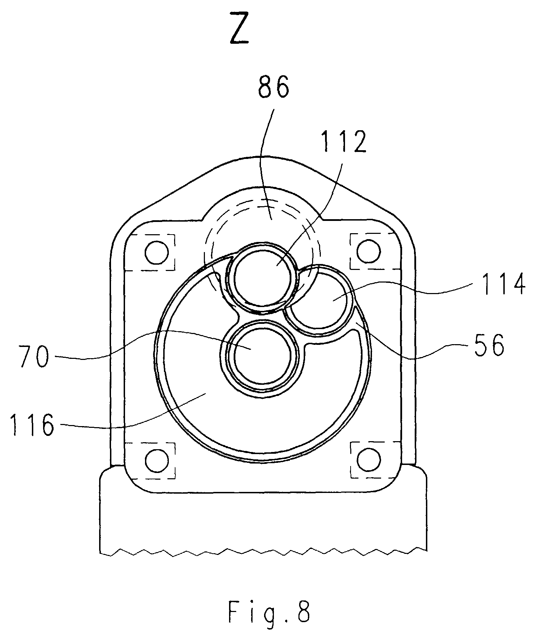

Wie aus Fig.8 ersichtlich ist, weist die Baugruppe 40 in der Anschlußfläche 56 in einer den Einlaß 70 umgebenden Ringfläche einen ersten Auslaß 112 auf. Dieser Auslaß 112 ist, wie auch aus Fig.2 ersichtlich ist, unmittelbar mit der Kammer 110 stromab von dem Regelventil verbunden. An diesem ersten Auslaß 112 wirkt somit der reduzierte Druck. Unmittelbar neben dem ersten Auslaß 112 aber gegen diesen abgedichtet ist in der Ringfläche der Anschlußfläche 56 einen zweiten Auslaß 114 auf. Dieser zweite Anschluß 114 steht nicht mit der Kammer 110 in Verbindung, schneidet aber die Kammer 108 stromauf von dem Regelventil an. An diesem Auslaß 114 wirkt somit der unreduzierte Druck aus der Versorgungsleitung. Weiterhin ist in der Anschlußfläche 56 um den Einlaß 70 herum eine bogenförmige Ausnehmung 116 gebildet.

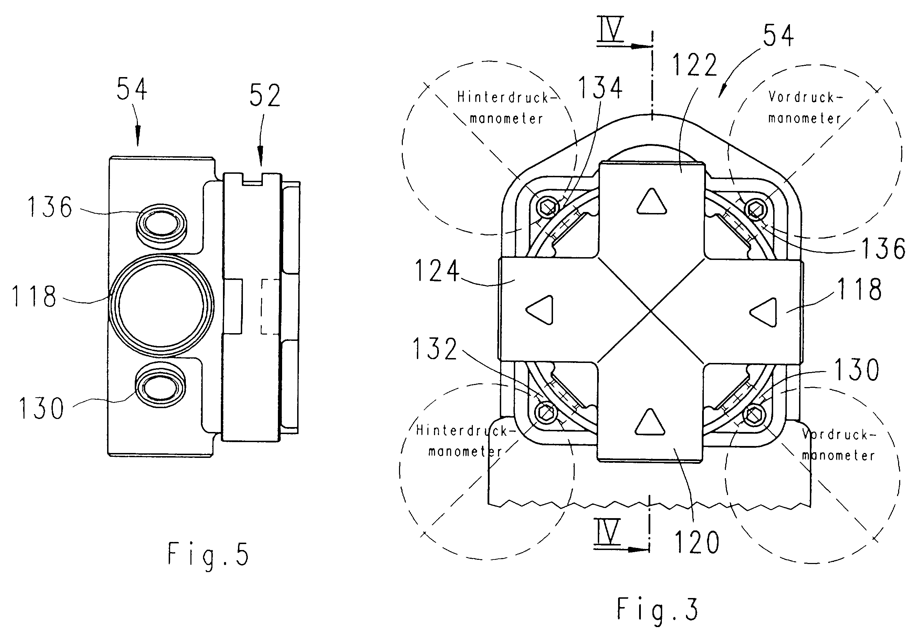

Der Verteiler 54 ist als 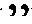 Kreuzflansch" ausgebildet. Der Verteiler 54 weist vier Anschlüsse 118 (E2/1), 120 (E2), 122 (A3) und 124 (A4/1) auf. Die Achsen der vier Anschlüsse liegen in einer Ebene und sind jeweils um 90° gegeneinander winkelversetzt. Die Anschlüsse 118 und 120 sind Eingangs-Anschlüsse, die mit einer Versorgungsleitung verbindbar sind. Die Anschlüsse 118 und 120 sind miteinander und, wie aus den Figuren 3 und 4 ersichtlich ist, mit der Einlaßöffnung 66 verbunden. Die Achse der Einlaßöffnung 66 verläuft senkrecht zu der Ebene der Achsen der Anschlüsse 118 bis 124. Die Einlaßöffnung 66 mündet in der Anschlußfläche 62 des Verteilers 54. Die Anschlußfläche 62 ist parallel zur Ebene der Achsen der Anschlüsse 118 bis 124. Die Anschlüsse 122 und 124 sind mit je einer Auslaßöffnung 126 bzw. 128 verbunden. Die Auslaßöffnungen 126 und 128 münden in der Anschlußfläche 62. Die Auslaßöffnungen liegen auf einer Ringfläche, welche die Einlaßöffnung 66 umgibt und mit der Ringfläche fluchtet, die an der Baugruppe 40 die Auslässe 112 und 114 und die bogenförmige Ausnehmung 116 enthält. Wie aus Fig.3 ersichtlich ist, sind an dem Verteiler winkelmäßig zwischen den Anschlüssen 118 bis 124 Prüfanschlüsse 130, 132, 134 und 136 vorgesehen. Die Prüfanschlüsse 130 und 136 sind mit den Anschlüssen 120 bzw. 118 verbunden. Diese Prüfanschlüsse 130 und 136 gestatten den Anschluß eines Manometers zur Messung des Vordrucks, d.h. des Druckes in der Versorgungsleitung. Die Manometer sind in Fig.3 gestrichelt angedeutet. Die Prüfanschlüsse 32 und 34 sind mit den Anschlüssen 124 bzw. 122 verbunden. Diese Prüfanschlüsse 132 und 134 gestatten den Anschluß eines Manometers zur Messung des an diesen Anschlüssen auftretenden Hinterdrucks. Der Hinterdruck kann der Druck in der Versorgungsleitung sein. Der Hinterdruck kann aber auch der durch den Druckminderer reduzierte Druck sein. Das hängt von der Stellung des Drehschieber-Ventils 52 ab.

Der Aufbau des Drehschieber-Ventils 52 ist insbesondere aus den Figuren 4 und 12 bis 19 ersichtlich. Das Drehschieber-Ventil 52 weist einen an den Verteiler 54 angeformten, zylinderringförmigen Mantel 138 und einen darin drehbar darin gelagerten scheinbenförmigen oder flach-zylindrischen Rotor 140 auf. Der Rotor 140 bildet auf beiden Seiten 58 und 60. Das Drehschieber-Ventil 52 sitzt mit seinen beiden Ventilflächen 58 und 60 zwischen den Anschlußflächen 56 und 66 der Baugruppe 40 bzw. des Verteilers 54. Der Rotor 140 weist axiale Durchbrüche auf.

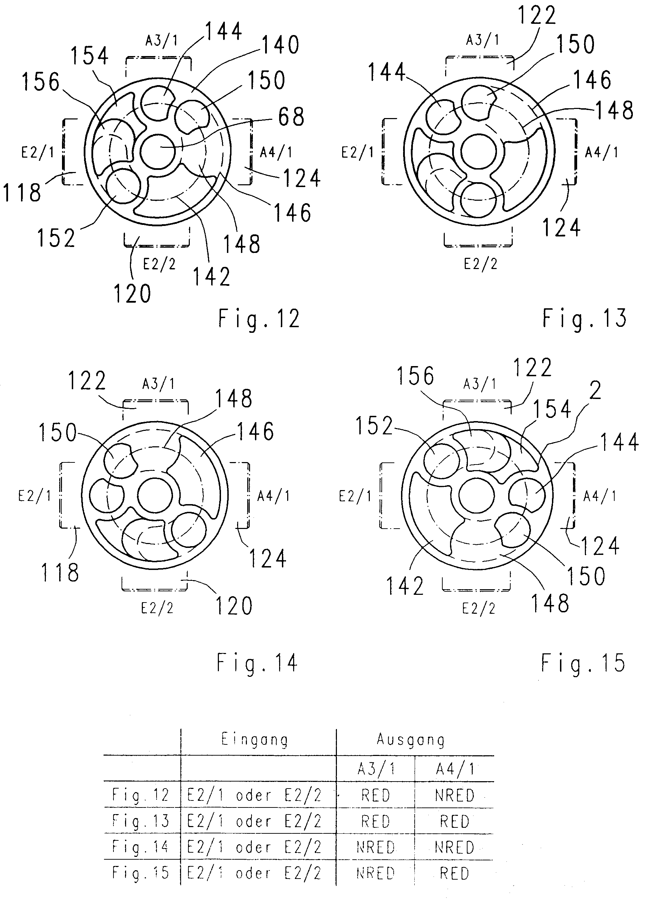

Wie z.B. aus Fig 12 ersichtlich ist, weist der Rotor 140 den zentralen Durchgang 68 (Fig.2) auf. Um den zentralen Durchgang 68 herum ist eine Ringfläche definiert, deren Mitte als Kreis 142 in Fig.12 gestrichelt angedeutet ist. Diese Ringfläche fluchtet ebenfalls mit der auf der Anschlußfläche der Baugruppe definierten Ringfläche. Auf der Ringfläche ist ein erster gerader Durchgang 144 gebildet. Anschließend an diesen geraden Durchgang 144 ist ein sich über einen Winkel von etwa 180° erstreckender, erster bogenförmiger Durchgang 146 vorgesehen. Dieser Durchgang 146 ist baugruppenseitig über einen Winkel von etwa 90° mit einer Abdeckung 148 versehen. Die Abdeckung 148 weist wiederum einen Durchbruch 150 anschließend an den ersten geraden Durchgang 144 auf. Anschließend an den ersten bogenförmigen Durchgang 146 ist ein zweiter gerader Durchgang 152 vorgesehen. Zwischen dem zweiten geraden Durchgang 152 und dem ersten geraden Durchgang 144 ist ein zweiter bogenförmiger Durchgang 154 vorgesehen. In dem zweiten bogenförmigen Durchgang 154 ist eine stufenförmige Zwischenwand 156 gebildet. Die Zwischenwand 156 erstreckt sich etwa auf der Hälfte zwischen baugruppen- und verteilerseitigen Ventilflächen 58 bzw. 60 etwa über die Hälfte des zweiten bogenförmigen Durchgangs 154. Dabei steht ein verteilerseitig von der Zwischenwand 156 gebildeter zum Verteiler 54 hin offener Raum mit dem zweiten geraden Durchgang 152 in Verbindung.

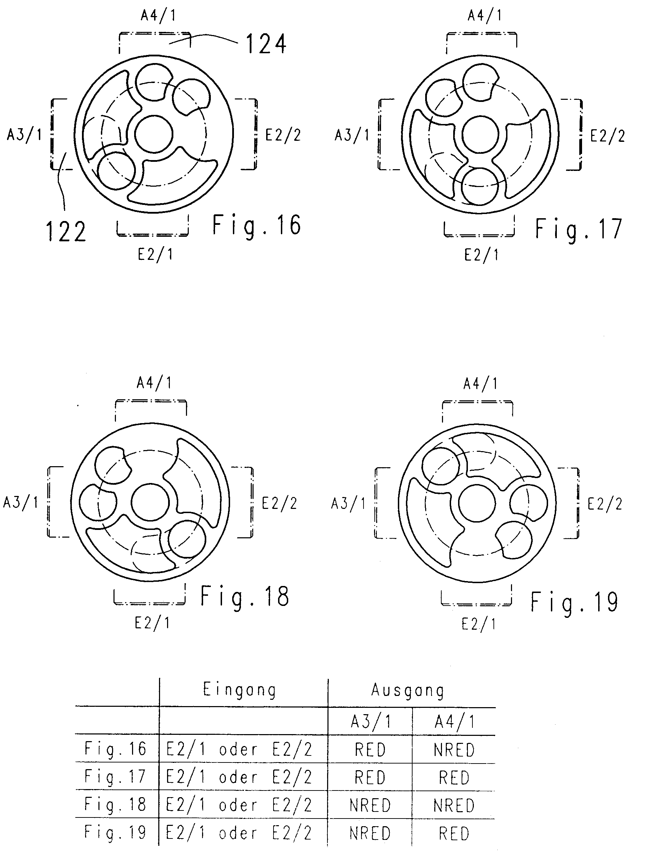

Die Figuren 12 bis 19 zeigen die Verbindungen, die mit dem Drehschieber-Ventil 52 in den verschiedenen Positionen des Rotors 140 herstellbar sind. In den Figuren 12 bis 15 ist dabei der Verteiler 54 so angeordnet, daß die Eingänge 118 und 120 (E2/1 bzw. E2/2) links bzw. unten angeordnet sind, die Versorgungsleitung also von links oder von unten herangeführt ist. In den Figuren 16 bis 19 ist der Verteiler 54 so angeordnet, daß die Eingänge 118 und 120 (E2/1 bzw. E2/2) unten bzw. rechts angeordnet sind, die Versorgungsleitung also von rechts oder von unten herangeführt ist.

In Fig.12 ist der erste Auslaß 112 der Baugruppe 40, an welchem der reduzierte Druck ansteht, über den ersten geraden Durchgang 144 des Drehschieber-Ventils 52 mit der Auslaßöffnung 126 des Verteilers und damit mit dem Auslaß 122 (A3/1) verbunden. Der zweite Auslaß 114 der Baugruppe, an welcher der nicht-reduzierte Druck aus der Kammer 108 ansteht, der in Fig.15 links von der vertikalen Mittelebene des Drehschieber-Ventils 52 liegt, ist über den zweiten bogenförmigen Durchgang 154 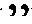 oberhalb" der Trennwand 156, d.h. den Raum zwischen Trennwand 156 und Anschlußfläche 56 der Baugruppe 40, mit der bogenförmigen Ausnehmung 116 in der Anschlußfläche 56 verbunden. bogenförmigen Durchgang 146 verbunden. Die Ausnehmung 116 steht daher unter nicht-reduziertem Druck. Die Ausnehmung erstreckt sich auch über den ersten bogenförmigen Durchgang 146 Dieser Durchgang 146 steht wieder mit dem Ausgang 124 (A4/1) in Verbindung. In der in Fig.12 dargestellten Position des Rotors 140 ist somit der Eingang 118 (E2/1) oder 120 (E2/2) mit dem Einlaß 70 der Baugruppe 40 verbunden. An dem Auslaß A3/1 steht reduzierter Druck an ( 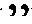 RED") und an dem Auslaß A4/1 nicht-reduzierter Druck ( 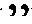 NRED"), wie in der ersten Zeile der Tabelle zu Fig.12 bis 15 angegeben ist.

In Fig.13 ist der erste Auslaß 112 der Baugruppe 40 über den Durchbruch 150 mit dem ersten bogenförmigen Durchgang 146 verbunden. Der erste bogenförmige Durchgang 146 steht sowohl mit dem Ausgang 122 (A3/1) als auch mit dem Ausgang 124 (A4/1) in Verbindung. An beiden Ausgängen A3/1 und A4/1 steht daher reduzierter Druck von dem ersten Anslaß 112 an, wie in der zweiten Zeile der Tabelle angegeben ist. Der zweite Auslaß 114 fluchtet mit dem ersten Durchgang 144, der in dieser Position verteilerseitig durch eine Dichtscheibe abgeschlossen ist

In Fig.14 ist der erste Ausgang 112 durch die Abdeckung 148 abgedeckt. Der zweite Ausgang 114 ist über den Durchbruch 150 mit dem ersten bogenförmigen Durchgang 146 verbunden. Damit ist der zweite Ausgang 114 der Baugruppe 40 über den ersten bogeförmigen Durchgang 146 linksherum in Fig.14 einmal mit dem Ausgang 122 (A3/1) und zum anderen mit dein Ausgang 124 (A4/1) verbunden. An beiden Ausgängen 122 (A3/1) und 124 (A4/1) steht daher bei der Stellung des Rotors 140 von Fig.14 nichtreduzierter Druck (NRED) an, wie in der dritten Zeile der Tabelle angegeben ist.

In Fig.15 ist der von der Zwischenwand 156 begrenzte, zum Verteiler 54 hin offene Raum über den zweiten geraden Durchgang 152 mit dem zweiten Auslaß 114 der Baugrupe 40 verbunden. Dieser Raum ist mit dem Auslaß 122 (A3/1) verbunden. Über den zweiten bogenförmigen Durchgang 154 ist dann der erste Auslaß 112 mit der bogenförmigen Ausnehmung 116 in der Anschlußfläche 56 verbunden. Die bogenförmige Vertiefung 116 steht daher unter dem reduzierten Druck. Die Ausnehmung 116 erstreckt sich auch über den ersten geraden Durchgang 144. Bei der in Fig.15 dargestellten Stellung des Rotors 140 fluchtet dieser gerade Durchgang 144 mit der Auslaßöffnung 128 des Verteilers und stellt daher eine Verbindung zwischen der Ausnehmung 116 und dem Ausgang 124 (A4/1) her. Damit liegt an dem Anschluß 122 der nicht-reduzierte Druck (NRED) und an dem Anschluß 124 (A4/1) reduzierter Druck, wie in der letzten Zeile der Tabelle zu Fig.12 bis 15 angegeben ist.

Die Wirkungsweise des Drehschieber-Ventils 52 bei der Anordnung des Verteilers 54 gemäß Fig.16 bis 19 ist entsprechend und daher nicht im einzelnen beschrieben. Die an den Ausgängen 122 und 124 anstehenden Drücke A3/1 und A4/1 sind in der Tabelle zu Fig.16 bis 19 zusammengestellt.

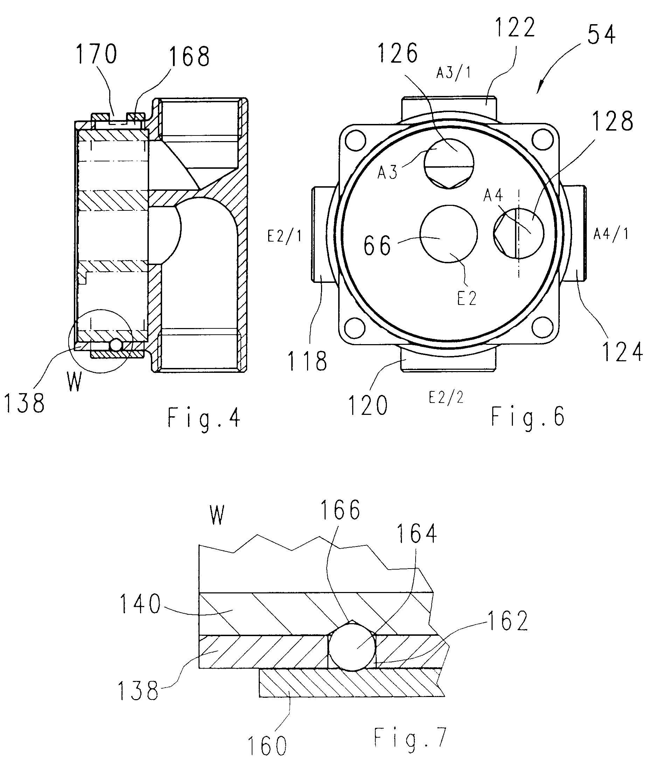

Wie aus Fig.4, 5 und 7 ersichtlich ist, ist um den Mantel 138 des Drehschieber-Ventils 52 ein elastisches Band 160 herumgelegt. In dem Mantel 138 sind Durchbrüche 162, in denen Rastenkugeln 164 sitzen. Die Rastenkugeln 164 rasten in flach-konische Vertiefungen 166 auf dem Umfang des Rotors 140 ein. die Raststellungen entsprechen den verschiedenen Positionen des Rotors 140. Das elastische Band 160 ist so weit dehnbar, daß die Rastung gelöst und der Rotor 140 in die gewünschte Position verdreht werden kann. Der Mantel 138 und das Band 160 haben im Bereich der Anschlüsse 122 und 124 Ausschnitte 168 bzw. 170, durch welche hindurch Aufschriften 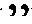 RED" oder 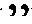 NRED" am Umfang des Rotors abgelesen werden können.

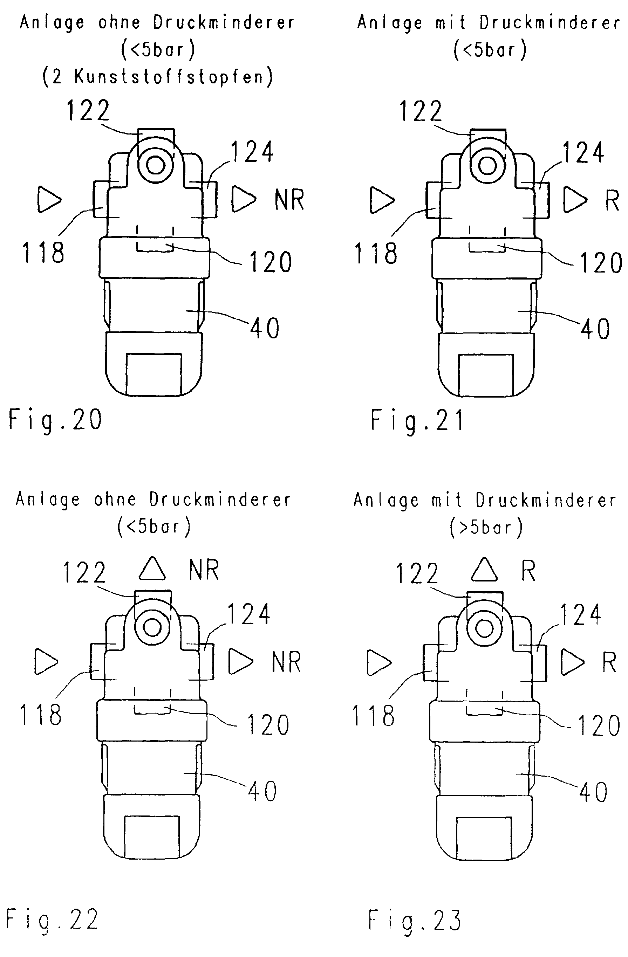

Die Figuren 20 bis 31 zeigen verschiedene Installations-Arten, die mit einer Filterarmaturen-Anordnung der vorstehend beschriebenen Art realisiert werden können.

Fig.20 zeigt eine Anlage, die ohne Druckminderer arbeitet. Die Versorgungsleitung mit weniger als 50 MPa ist von links herangeführt. Von der Anlage geht eine Leitung mit nicht-reduziertem Wasserdruck nach links ab. Das Drehschieber-Ventil 52 kann dabei in die Position von Fig.12 gestellt werden. Die Versorgungsleitung ist mit dem Anschluß 118 verbunden, die abgehende Leitung mit dem Anschluß 124. Die Anschlüsse 120 und 122 sind durch Kunststoff-Stopfen verschlossen.

Fig.21 zeigt eine ähnliche Anlage, bei welcher der Druck in der abgehenden Leitung reduziert ist. Zu diesem Zweck ist das Drehschieber-Ventil 52 in die Position von Fig.13 gestellt.

Fig.22 zeigt eine Anlage mit zwei abgehenden Leitungen, von denen die eine senkrecht nach oben und die andere waagerecht nach rechts verläuft. Die Versorgungsleitung kommt wieder von links und ist mit dem Anschluß 118 verbunden. Die abgehenden Leitungen sind mit den Anschlüssen 122 und 124 verbunden. In beiden abgehenden Leitungen soll nicht-reduzierter Druck herrschen. Hierzu wird das Drehschieber-Ventil 52 in die Position von Fig.14 gestellt. Der Anschluß 120 ist durch einen Kunststoff-Stopfen verschlossen.

Fig.23 zeigt eine ähnliche Anlage wie Fig.22, bei welcher jedoch der Druck in der Versorgungsleitung größer als 50 MPa ist und Druck in beiden abgehenden Leitungen reduziert sein soll. Zu diesem Zweck wird das Drehschieber-Ventil 52 in die Position von Fig.13 gestellt.

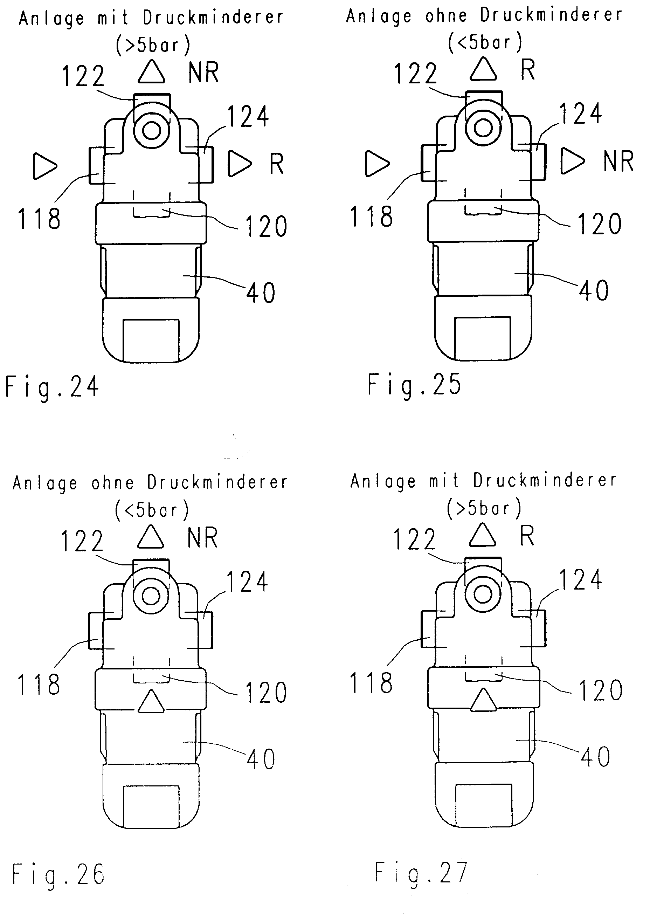

Fig.24 zeigt eine Anlage ähnlich Fig.22 oder 23, bei welcher der Druck in der Versorgungsleitung mehr als 50 MPa beträgt, bei welcher jedoch der Druck in der nach oben abgehenden Leitung nicht-reduziert sein soll, während der Druck in der nach rechts abgehenden Leitung durch den Druckminderer 46 reduziert wird. Hierzu wird das Drehschieber-Ventil 52 in die Position von Fig.19 gebracht.

Fig.25 zeigt eine Anlage ähnlich der von Fig.24 mit einem Druck in der Versorgungsleitung mehr als 50 MPa, bei welcher jedoch der Druck in der nach oben abgehenden Leitung reduziert werden soll und der Druck in der waagerecht nach rechts abgehenden Leitung nicht-reduziert ist. Hierzu wird das Drehschieber-Ventil 52 in die Position von Fig.12 gebracht.

Fig.26 zeigt eine Anlage, bei welcher die Versorgungsleitung von unten herangeführt und mit dem Anschluß 120 verbunden ist. Für die Funktion der Anlage ist es unwesentlich, ob das Wasser aus der Versorgungsleitung über Anschluß 118 oder über Anschluß 120 zugeführt wird, da beide Anschlüsse miteinander verbunden sind. Der Druck in der Versorgungsleitung ist weniger als 50 MPa. Der Druck in einer nach oben abgehenden Leitung soll nicht-reduziert sein. Hierzu kann das Drehschieber-Ventil 52 in die Stellung von Fig.14 gestellt werden. Die Anschlüsse 118 und 124 werden durch Kunststoff-Stopfen verschlossen.

Fig.27 zeigt eine ähnliche Anlage wie Fig.26. Der Druck in der Versorgungsleitung ist höher als 50 MPa. Der Druck in der nach oben abgehenden Leitung soll reduziert werden. Zu diesem Zweck wird das Drehschieber-Ventil 52 in die Position von Fig.12 gestellt.

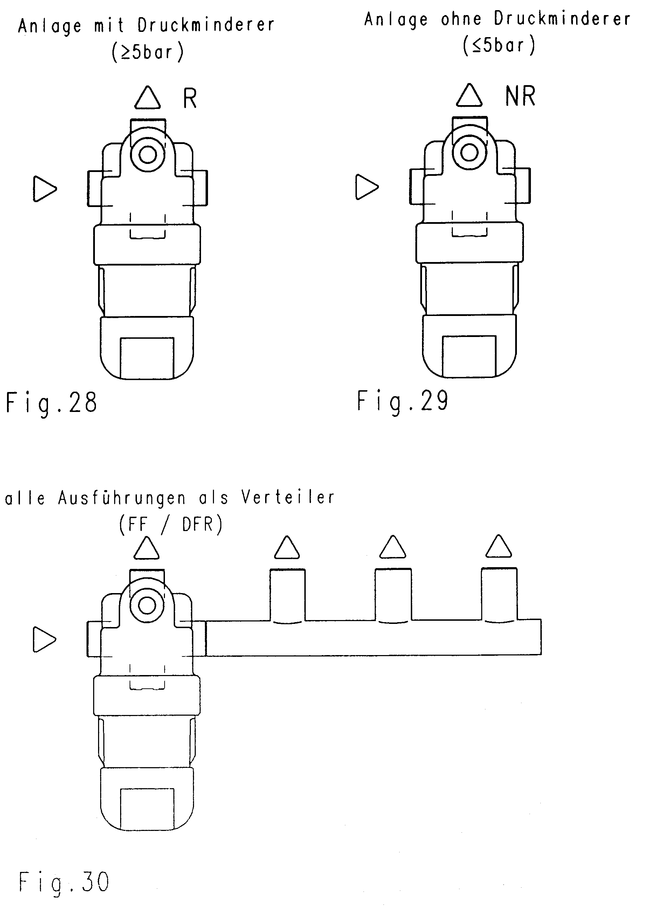

Fig.28 zeigt eine Anlage, bei welcher der Druck in einer von links herangeführten Druckleitung nicht kleiner als 50 MPa ist. Der Druck in der nach oben abgehenden Leitung soll reduziert werden. Zu diesem Zweck wird das Drehschieber-Ventil 52 in die Position von Fig.12 gebracht. Die Anschlüsse 120 und 124 werden durch Kunststoff-Stopfen verschlossen.

Fig.29 zeigt eine Anlage ähnlich der von Fig.28. Dabei ist jedoch der Druck in der Versorgungsleitung nicht größer als 50 MPa. Der Druck in der nach oben abgehenden Leitung soll nicht-reduziert sein. Zu diesem Zweck wird das Drehschieber-Ventil 52 in die Position von Fig.14 gebracht.

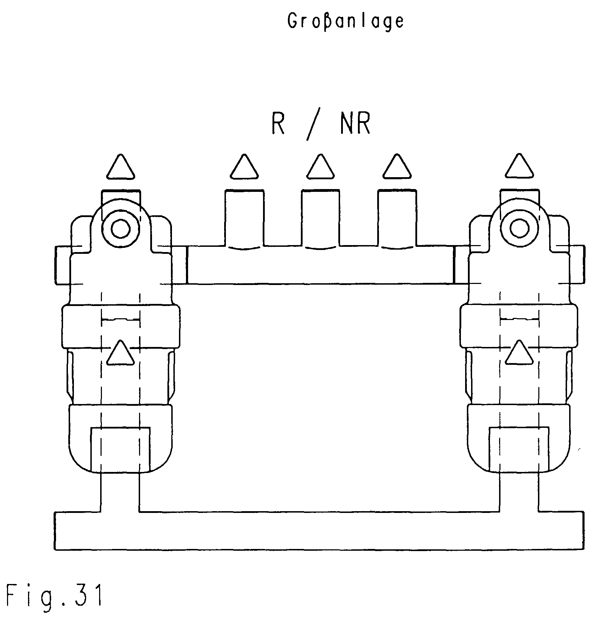

Fig.30 veranschaulicht, daß die z.B. nach rechts abgehenden Leitungen ihrerseits als Verteiler dienen können, von dem eine Mehrzahl von Leitungen parallel nach oben geführt sind. Fig.31 zeigt eine Großanlage mit zwei Filterarmaturen der vorstehend beschriebenen Art.

Die Filterarmatur oder Baugruppe 40 weist eine Absaugvorrichtung auf, welche es gestattet, das Filter von Zeit zu Zeit abzusaugen.

Zu diesem Zweck ist am unteren Ende des Gehäuse-Unterteils ein Auslauf 170 vorgesehen, der von einem Kugelventil 172 beherrscht wird. Das Kugelventil 172 kann von einem Drehgriff 174 betätigt werden, der über einen Mehrkant 176 und eine Schnappeinrichtung 178 mit einer Betätigungsspindel 180 des Kugelventils verbindbar ist.

Das Filter 80 ist zwischen den Filterhaltern 76 und 78 gehalten. Der Filterhalter 78 ist zwischen dem inneren Führungsrohr 78 und einem an seinem in Fig.2 oberen Ende koaxial in dem Gehäuse-Unterteil 44 gehaltenen Außenrohr 182 geführt. Zwischen dem Außenrohr 182 und der Innenwand des Gehäuse-Unterteils 44 ist ein Ringraum 184 gebildet. Der untere Teil des Gehäuse-Unterteils 44 unterhalb des Außenrohres 182 steht über einen Zwischenraum 186 zwischen dem am unteren Ende geschlossenen Führungsrohre 78 mit dem Auslauf 170 in Verbindung. Das Führungsrohr 78 ist über Rippen 187 im Abstand von dem Boden des Gehäuse-Unterteils 44 gehalten. Der Zwischenraum 186 steht über eine Längsbohrung 188 mit dem Inneren des Führungsrohres 78 in Verbindung. Das Innere des Führungsrohres 78 ist über eine Injektordüse 190 mit der Bohrung des Auslaufrohres 72 verbunden.

Der in Fig.2 untere Filterhalter 78 bildet einen auf den, Führungsrohr 74 geführten Ringkolben. Wenn der Auslauf 170 über das Kugelventil 172 geöffnet wird, dann wirkt unterhalb des Filterhalters 78 der Atmosphärendruck. Oberhalb des Filterhalters 78 wirkt der nicht-reduzierte Wasserdruck. Dadurch werden die Filterhalter 76 und 78 mit dem dazwischen aufgespannten Filter 80 nach unten in Fig.2 bewegt. Das ist in der rechten Hälfte von Fig.2 dargestellt. Dabei wird eine Rückholfeder 192 zusammengedrückt. Nach Schließen des Kugelventils 172 erfolgt über die Injektordüse 190, das Innere des Führungsrohres 74, die Längsbohrung 188 und den Zwischenraum 186 ein Druckausgleich. Die auf den Filterhalter 76 drückende Rückholfeder 192 führt das Filter wieder in die in Fig.2 links dargestellte Normallage zurück.

Bei der Abwärtsbewegung des Filters 80 wird das Filter an fünf Absaugeinrichtungen 194, 196, 198, 200 und 202 entlanggeführt. Die Absaugeinrichtungen 194, 196, 198, 200 und 202 überdecken den gesamten Umfang des Filters 80. Die Absaugeinrichtungen 194, 196, 198, 200 und 202 enthalten langgestreckte, gebogene Saugkörper 204 mit einem zu dem Filter hin offenen U-Profil. Die Saugkörper 204 sind an dem Außenrohr 182 über Elastomer-Büchsen 206 befestigt. Durch die Verwendung der Elastomer-Büchsen 206 wird einem Verklemmen der Absaugeinrichtungen 194, 196, 198, 200 und 202 an dem Filter 80 entgegengewirkt. Die Elastomer-Büchsen 206 verbinden die Innenräume der U-Profile der Absaugeinrichtungen 194, 196, 198, 200 und 202 mit dem Ringraum 184 und damit -über den Zwischenraum 186 - mit dem Auslauf 170. Beim Öffnen des Kugelventils 172 strömt somit Wasser entgegen der normalen Strömungsrichtung durch das Filter 80 und die Absaugeinrichtungen 194, 196, 198, 200 und 202. Dadurch wird der auf der Außenseite des Filters 80 abgelagerte Schmutz abgesaugt und zum Ablauf 170 abgeführt. An dem Ablauf 170 sitzt ein Ablauftrichter 208 zur Verbindung an ein Kunststoff-Abwasserrohr. Wenn kein Abwassersystem vorhanden ist, kann ein Schlauch auf eine Schlauchtülle 210 aufgesteckt werden.

Die Injektordüse 190 saugt bei normalem Betrieb und Wasserdurchfluß Wasser über die Längsbohrung 188 und den Zwischenraum 186 aus dem unteren Teil des Gehäuse-Unterteils 44 an. Dadurch wird verhindert, daß sich dort stehendes Wasser ansammelt.

## Patentansprüche

1. Filterarmaturen-Anordnung für Trinkwasser mit einer einen Druckminderer (46) und ein Filter (80) enthaltenden Baugruppe (40), **dadurch gekennzeichnet, daß** die Baugruppe (40) an einen Verteiler (54) mit mehreren Anschlüssen (118,120, 122, 124) und ein zwischen Verteiler (54) und Baugruppe (40) eingeschaltetes Umschaltventil (52) angeschlossen ist, wobei durch das Umschaltventil (52) wahlweise Strömungswege zwischen einem Anschluß (118 oder 120) des Verteilers (54) als Einlaß nur über das Filter (80) oder über die Reihenschaltung von Filter (80) und Druckminderer (46) mit einem anderen Anschluß (122 und/oder 124) als Auslaß herstellbar sind.

2. Filterarmaturen-Anordnung nach Anspruch 1, **dadurch gekennzeichnet, daß** durch das Umschaltventil (52) wahlweise ein Strömungsweg zwischen einem von mehreren Anschlüssen (118,120) als Einlaß und wenigstens einem von mehreren Anschlüssen (122,124) als Auslaß herstellbar ist.

3. Filterarmaturen-Anordnung nach Anspruch 1 oder 2, **dadurch gekennzeichnet, daß**
(a) der Verteiler (54) ein Verteilerflansch mit einer Mehrzahl von Anschlüssen (118, 120, 122, 124) ist, deren Achsen in einer Ebene liegen und
(b) das Umschaltventil (52) ein zwischen Verteilerflansch und einer Anschlußfläche (56) der Baugruppe (40) sitzendes, flaches Drehschieber-Ventil ist.

4. Filterarmaturen-Anordnung nach Anspruch 3, **dadurch gekennzeichnet, daß**
(a) in der Anschlußfläche (56) der Baugruppe (40) ein Einlaß (70) fluchtend mit der Drehachse des Umschalt-Ventils (52) gebildet ist,
(b) außermittig zu dieser Drehachse in der Anschlußfläche (56) ein erster Auslaß (112) der Baugruppe (40) mündet, der mit einem Raum (110) stromab von dem Regelventil (90,92) des Druckminderers (46) in Verbindung steht,
(c) außermittig zu der Drehachse in der Anschlußfläche (56) ein zweiter Auslaß (114) der Baugruppe (40) mündet, der mit einem Raum (108) stromauf von dem Regelventil (90,92) des Druckminderers (46) in Verbindung steht, und
(d) über das Umschalt-Ventil (52) in verschiedenen Winkelstellungen desselben verschiedene Kombinationen von Strömungswegen zwischen dem ersten und dem zweiten Auslaß (112 bzw. 114) und den Anschlüssen (122,124) des Verteilers (54) herstellbar sind.

5. Filterarmaturen-Anordnung nach Anspruch 4, **dadurch gekennzeichnet, daß**
(a) in der Anschlußfläche (56) auf einer zu der Drehachse des Drehschieber-Ventils (52) konzentrischen Ringfläche um den zentralen Einlaß (70) herum nebeneinander der erste und der zweite Auslaß (112 bzw. 114) und eine sich über den Rest der Ringfläche erstreckende, bogenförmige Vertiefung (116) vorgesehen sind,
(b) der Verteiler (54) mit einer planen Anschlußfläche (62) an einer planen Ventilfläche (60) des scheibenförmigen Drehschieber-Ventils (52) anliegt,
(c) der Verteiler (54) vier Anschlüsse (118,120,122,124) aufweist, deren Achsen in der Ebene um jeweils 90° gegeneinander winkelversetzt sind, wobei
- zwei benachbarte Anschlüsse (118,120) als Einlässe miteinander und mit einer zentralen Einlaßöffnung (66) verbunden sind, die fluchtend mit der Drehachse des Drehschieber-Ventils (52) in der Anschlußfläche (62) des Verteilers (54) mündet,
- jeder der beiden anderen Anschlüsse (122,124) des Verteilers (54) mit einer zugehörigen Auslaßöffnung (126 bzw. 128) in Verbindung steht, die in einer Ringfläche der Anschlußfläche (60) des Verteilers (54) münden, welche mit der auf der Anschlußfläche (56) der Baugruppe (40) definierten Ringfläche fluchtet,
(d) das Drehschieber-Ventil (52) einen zentralen Durchgang (68) koaxial zu der Drehachse des Drehschieber-Ventils (52) aufweist, der eine Verbindung zwischen der Einlaßöffnung (66) des Verteilers (54) und dem zentralen Einlaß (70) der Baugruppe (40) herstellt,
(e) auf einer Ringfläche des Drehschieber-Ventils (52), welche ebenfalls mit der auf der Anschlußfläche (56) der Baugruppe (40) definierten Ringfläche fluchtet, um den zentralen Durchgang (68) herum
- ein erster gerader Durchgang (144) gebildet ist,
- anschließend an diesen geraden Durchgang (144) ein sich über einen Winkel von etwa 180° erstreckender, erster bogenförmiger Durchgang (146) vorgesehen ist, wobei dieser Durchgang (146) baugruppenseitig über einen Winkel von etwa 90° mit einer Abdeckung (148) versehen ist, die wiederum einen Durchbruch (150) anschließend an den ersten geraden Durchgang (144) aufweist,
- anschließend an den ersten bogenförmigen Durchgang (146) ein zweiter gerader Durchgang (152) vorgesehen ist,
- zwischen dem zweiten geraden Durchgang (152) und dem ersten geraden Durchgang (144) ein zweiter bogenförmiger Durchgang (154) vorgesehen ist und
- in dem zweiten bogenförmigen Durchgang (154) eine stufenförmige Zwischenwand (156) gebildet ist, die sich etwa auf der Hälfte zwischen baugruppen- und verteilerseitigen Ventilflächen (58,60) etwa über die Hälfte des zweiten bogenförmigen Durchgangs (154) erstreckt, wobei ein verteilerseitig von der Zwischenwand (156) gebildeter zum Verteiler (54) hin offener Raum mit dem zweiten geraden Durchgang (152) in Verbindung steht.

6. Filterarmaturen-Anordnung nach einem der Ansprüche 1 bis 5, **dadurch gekennzeichnet, daß**
(a) die Baugruppe (40) ein langgestrecktes Gehäuse (42,44) von zylindrischer Grundform mit einer Längsachse aufweist,
(b) das zylindrische Filter (80) koaxial zu der Längsachse des Gehäuses (42,44) in dem Gehäuse gehaltert ist und
(c) der Druckminderer (46) quer zu der Längsachse des Gehäuses (42,44) in einer Bohrung (86)im oberen Teil (42) des Gehäuses angeordnet ist.

7. Filterarmaturen-Anordnung nach Anspruch 6, **dadurch gekennzeichnet, daß** in der Bohrung (86) eine erste Kammer (108) stromauf von dem Regelventil (90,92) des Druckminderers (46) und eine zweite Kammer (110) stromab von dem Regelventil (90,92) des Druckminderers (46) gebildet sind.

8. Filterarmaturen-Anordnung nach Anspruch 7, **dadurch gekennzeichnet, daß**
(a) eine Anschlußfläche (56), an welcher das als Drehschieber-Ventil ausgebildete Umschaltventil (52) anliegt, sich senkrecht zu der Längsrichtung der Bohrung (86) erstreckt,
(b) in der Anschlußfläche (56) ein zentraler Einlaß (70) vorgesehen ist, der mit dem Innenraum des Gehäuses (42,44) außerhalb des Filters (80) in Verbindung steht,
(c) in der Anschlußfläche (56) ein erster Auslaß (112) mündet, der in Verlängerung der den Druckminderer (46) aufnehmenden Bohrung (86) angeordnet ist und mit der zweiten Kammer (110) in Verbindung steht und
(d) in der Anschlußfläche (56) weiterhin neben dem ersten Auslaß (112) ein zweiter Auslaß (114) mündet, der die erste Kammer (108) anschneidet.
